# NEUE EUROPÄISCHE PATENTSCHRIFT

(11) **EP 3 088 156 B2**
(45) Veröffentlichungstag und Bekanntmachung des Hinweises auf die Entscheidung über den Einspruch: **26.06.2024**
(45) Hinweis auf die Patenterteilung: 22.09.2021
(21) Anmeldenummer: 16166669.8
(22) Anmeldetag: 22.04.2016
(51) Int. Cl.: B29C 45/14, B60Q 3/54, B60Q 3/78, B60Q 3/217

(54) **VERFAHREN ZUM HERSTELLEN EINES BELEUCHTBAREN ANBAUTEILS, BELEUCHTBARES ANBAUTEIL UND KRAFTFAHRZEUG MIT EINEM ANBAUTEIL**
METHOD FOR PRODUCING AN ILLUMINABLE EXTENSION, EXTENSION WHICH CAN BE ILLUMINATED AND MOTOR VEHICLE HAVING AN EXTENSION
PROCEDE DE FABRICATION D'UNE PIECE RAPPORTEE POUVANT ETRE ECLAIREE, PIECE RAPPORTEE POUVANT ETRE ECLAIREE ET VEHICULE AUTOMOBILE LA COMPRENANT

(30) Priorität: 29.04.2015 DE 102015005569
(43) Veröffentlichungstag der Anmeldung: 02.11.2016
(73) Patentinhaber: AUDI AG, 85045 Ingolstadt (DE)
(72) Erfinder: Kowatzki, Stefan, 85134 Stammham (DE)
(74) Vertreter: Hofstetter, Schurack & Partner

(56) Entgegenhaltungen:
- EP-A2- 1 344 688
- EP-A2- 1 458 221
- DE-A1-102005 042 627
- DE-A1-102015 208 871
- DE-U1-202012 011 860

## Beschreibung

Die Erfindung geht aus von einem Verfahren zum Herstellen eines beleuchtbaren Anbauteils, welches an ein Kraftfahrzeug anbringbar ist, gemäß dem Oberbegriff des Patentanspruchs 1, einem beleuchtbaren Anbauteil für ein Kraftfahrzeug gemäß dem Oberbegriff des Patentanspruchs 11 und einem Kraftfahrzeug mit einem solchen Anbauteil.

Bei aus dem Stand der Technik bekannten Kraftfahrzeugen finden Konturbeleuchten und Signaturen desweilen Anwendung zum Beispiels bei Lautsprechern, Tastern und Bedienfeldern, sowie Cupholdern, usw. Dabei handelt es sich um Leuchtstreifen, die bestimmte Konturen hervorheben beziehungsweise betonen sollen. Die Lichtleiter werden entweder direkt einsehbar oder mit einer Streuscheibe davor verbaut, um die Eigenschaften der lichtleitenden Elemente nicht negativ zu beeinflussen. Weiterhin kann auch eine ambiente Beleuchtung bereitgestellt werden, in dem eine solche Beleuchtung an ein Anbauteil gesetzt wird und indirekt auf eine zweite Anstrahlfläche abstrahlt. Ist die Beleuchtung abgeschaltet, weil sie gerade nicht notwendig ist, zum Beispiel am Tag, oder nicht gewünscht, so sind die einzelnen Beleuchtungselemente für den Benutzer dennoch sichtbar. Dies kann zu Ablenkungen oder Irritationen des Benutzers führen.

Die US 7,350,949 B2 beschreibt ein Anbauteil für ein Kraftfahrzeug, welches ein Substrat aufweist, welches auf einer Seite mit einer Beschichtung überzogen ist und an dessen anderer Seite eine Maske angeordnet ist, die einen maskierten und einen unmaskierten Teil der anderen Seite des Substrats definiert. Die Maske wird dabei durch eine Lichtquelle beleuchtet, wobei die Deckschicht so ausgebildet ist, dass im unbeleuchteten Zustand für einen Betrachter kein Unterschied zwischen dem maskierten und dem nichtmaskierten Teil erkennbar ist. Dadurch wird es ermöglicht, dass im beleuchteten Zustand Zeichen und Symbole für den Benutzer sichtbar sind, im unbeleuchteten Zustand jedoch diese Zeichen und Symbole beziehungsweise deren Konturen für den Betrachter nicht wahrnehmbar sind. Dabei wird das Substrat als Körper mit einer dreidimensionalen Oberfläche ausgebildet, die die entsprechende Komponente haben soll. Um die Deckschicht auf das Substrat aufzubringen, kann ein Wassertransferdruckverfahren oder Spritzgussverfahren verwendet werden. Die Maske kann als vom Substrat separater Körper mit Aussparungen bereitgestellt sein oder ebenfalls mit einem Druckverfahren auf das Substrat aufgebracht werden. Anbauteile eines Kraftfahrzeugs können, je nach Verwendungszweck, diverse dreidimensionale Oberflächenstrukturen aufweisen. Um derartige mehr oder weniger komplexe Oberflächen zu beschichten oder zu bedrucken, sind entsprechend aufwendige Verfahren erforderlich.

Die EP 1 458 221 A2 beschreibt einen Kunststoffformkörper, der einen Kunststoffgrundkörper und eine dem Kunststoffgrundkörper zumindest teilweise überdeckende Kunststofffolie aufweist, wobei zwischen der Kunststofffolie und dem Kunststoffgrundkörper eine Elektrolumineszenz-Funktionsschicht und eine farbige, lichtdurchlässige Schicht derart angeordnet sind, dass die lichtdurchlässige Schicht durch in der Elektrolumineszenz-Funktionsschicht erzeugtes Licht durchleuchtbar ist. Dabei ist weiterhin vorgesehen, dass auf der dem Kunststoffgrundkörper abgewandten Fläche der Kunststofffolie eine farbige, lichtundurchlässige Schicht mit als Ornament ausgebildeter Ausnehmung vorhanden ist.

Die DE 20 2012 011 860 U1 beschreibt einen durchstrahlbaren Ausstattungsgegenstand mit einem hinterleuchteten aber lichtundurchlässigen Keramikkörper, welcher durchbrochen ist, wobei in die Durchbrechungen jeweils ein Lichtleitkörper mit der Querschnittsgeometrie eines Dekors oder Symbols eingebracht ist.

Die DE 10 2005 042 627 A1 beschreibt eine Beleuchtung eines Gegenstands, wobei die Beleuchtung in Form einer an eine Stromquelle angeschlossenen Elektrolumineszens-Folie in den Gegenstand integriert oder auf diesen aufgebracht ist.

Aufgabe der vorliegenden Erfindung ist es daher, ein Verfahren zum Herstellen eines beleuchtbaren Anbauteils, ein beleuchtbares Anbauteil und ein Kraftfahrzeug mit einem beleuchtbaren Anbauteil bereitzustellen, welche eine einfachere und kostengünstigere Ausgestaltung des Anbauteils ermöglichen.

Diese Aufgabe wird gelöst durch ein Verfahren zum Herstellen eines beleuchtbaren Anbauteils, durch ein beleuchtbares Anbauteil und ein Kraftfahrzeug mit einem solchen beleuchtbaren Anbauteil gemäß den unabhängigen Ansprüchen. Vorteilhafte Ausgestaltungen der Erfindung finden sich in den abhängigen Ansprüchen.

Das erfindungsgemäße Verfahren zum Herstellen eines beleuchtbaren Anbauteils, welches an ein Kraftfahrzeug anbringbar ist, zeichnet sich dadurch aus, dass eine lichtdurchlässige Folie mit einer ersten Seite und einer der ersten Seite gegenüberliegenden zweiten Seite bereitgestellt wird, zumindest ein Teil der ersten Seite der Folie mit einer Maskenschicht beschichtet wird, die bis auf zumindest einen lichtdurchlässigen Bereich lichtundurchlässig ist, und zumindest ein Teil der zweiten Seite der Folie mit einer zweiten Schicht beschichtet wird, welche derart ausgebildet ist, dass sie nur einen vorbestimmten Anteil an auf die Folie treffendes Licht durchlässt. Des Weiteren weist die zweite Schicht eine Pigmentierung oder Streuadditive oder einen Farbton auf. Weiterhin wird die beschichtete Folie in einem Spritzgussverfahren hinterspritzt, wodurch für die Folie ein Träger gebildet wird, wobei der Träger beim Hinterspritzen derart gebildet wird, dass er einen lichtdurchlässigen Bereich aufweist, der an den zumindest einen lichtdurchlässigen Bereich der Maskenschicht angrenzt.

Der besonders große Vorteil der Erfindung liegt darin, dass eine Folie bereitgestellt wird, welche im beschichteten Zustand mit einem Träger hinterspritzt wird. Die Folie selbst kann dabei vorteilhafter Weise eben ausgebildet sein, lässt sich jedoch aufgrund ihrer Flexibilität auf besonders einfache Weise an jede gewünschte dreidimensionale Oberfläche anpassen. Diese Flexibilitätseigenschaft kann beispielsweise durch eine Folie mit einer dicke von 0, 4 mm bis 1,2 mm bereitgestellt werden. Diese Flexibilität der Folie wiederum ermöglicht es vorteilhafterweise, zum Beschichten der Folie, sowohl mit der zweiten Schicht als auch mit der Maskenschicht, besonders einfache Beschichtungsverfahren, wie beispielsweise Siebdruck oder Lackierverfahren, zu verwenden. Auf aufwendige Verfahren zur Beschichtung dreidimensionaler Oberflächen kann damit vorteilhafterweise verzichtet werden. Durch Hinterspritzen der Folie mit einem Träger wird zudem eine besonders stabile Verbindung zwischen der Folie und dem Träger geschaffen, wobei zugleich die Schaffung dieser Verbindung durch ein Spritzgussverfahren es auf besonders einfache Weise ermöglicht, den Träger mit der Folie in jeder beliebigen geometrischen Form auszubilden. Insgesamt kann so ein Anbauteil geschaffen werden, welches auf besonders kostengünstige, einfache und zeitsparende Weise hergestellt werden kann.

Weiterhin wird es durch die zweite Schicht, welche nur einen vorbestimmten Anteil an auf die Folie treffendes Licht durchlässt, ermöglicht, dass Unterschiede zwischen dem lichtdurchlässigen Bereich und undurchlässigen Bereichen der Maskenschicht im nicht beleuchteten Zustand des Anbauteils nicht sichtbar sind. Dagegen kann im beleuchteten Zustand des Anbauteils je nach Ausbildung bzw. Form des lichtdurchlässigen Bereichs der Maskenschicht eine Signatur, Kontur, Graphik oder Symbole auf dem Anbauteil in Erscheinung treten. Dadurch lassen sich vorteilhafterweise unterschiedliche Erscheinungscharakteristiken des Anbauteils bereitstellen, je nachdem ob dieses beleuchtet oder nicht beleuchtet ist, wodurch beispielsweise für dieses Anbauteil ein Tagdesign sowie auch ein Nachtdesign bereitstellbar ist.

Unter einer lichtdurchlässigen Folie kann dabei eine transparente oder eine transluzente Folie verstanden werden, die also zumindest einen Teil des aus sie auftreffenden Lichts durchlässt. Gleiches gilt für den lichtdurchlässigen Bereich der Maskenschicht.

Erfindungsgemäß wird der Träger beim Hinterspritzen der Folie derart ausgebildet, dass er einen lichtdurchlässigen Bereich aufweist, der an den zumindest einen lichtdurchlässigen Bereich der Maskenschicht angrenzt. Auf diese Weise kann der lichtdurchlässige Bereich der Maskenschicht durch den lichtdurchlässigen Bereich des Trägers hindurch beleuchtet werden, wodurch in einer Draufsicht auf die zweite Schicht die durch den lichtdurchlässigen Bereich der Maskenschicht bestimmte Graphik, Signatur, Kontur, usw. sichtbar wird. Der lichtdurchlässige Bereich des Trägers ist dabei als ein Freiraum ausgebildet. Die Ausbildung des lichtdurch-lässigen Bereichs als Freiraum stellt dabei eine beson-ders materialsparende Variante dar, während die Ausbildung des lichtdurchlässigen Bereichs mit einem lichtdurchlässigen Material die Stabilität der Gesamtanordnung erhöht, besonders im Bereich, in welchem die Maskenschicht den lichtdurchlässigen Bereich aufweist. Die Ausbildung des lichtdurchlässigen Bereichs mit einem lichtdurchlässigen Material ermöglicht durch die bereitgestellte Stabilität in diesem Bereich zudem auch eine besonders dünne Ausbildung der Folie selbst.

Der Träger kann dabei insgesamt lichtundurchlässig ausgebildet werden, bis auf den genannten lichtdurchlässigen Bereich, oder der Träger kann auch als Ganzes aus einem lichtdurchlässigen Material gebildet werden. Auch können Teile des Trägers, wenn diese lichtdurchlässig ausgebildet sind, als Lichtleiter für eine Beleuchtung des Anbauteils fungieren. Damit sind wiederum besonders vielzählige und vorteilhafte Möglichkeiten bereitgestellt, die je nach Situation und Anforderungen an das Anbauteil eine materialsparende, kostengünstige und gleichzeitig stabile Ausbildung des Trägers ermöglichen.

Bei einer weiteren vorteilhaften Ausgestaltung der Erfindung wird beim Hinterspritzen der beschichteten Folie die Folie mit einem einkomponentigen oder zweikomponentigen Träger hinterspritzt. Dies stellt wiederum vorteilhafterweise vielzählige Möglichkeiten zur Ausbildung des Trägers und insbesondere dessen lichtdurchlässigen Bereichs bereit, wobei wiederum durch Spritzgussverfahren, sowie insbesondere auch Mehrkomponenten-Spritzgussverfahren, besonders einfache und kostengünstige Möglichkeiten gegeben sind, um dies zu bewerkstelligen.

Bei einer weiteren vorteilhaften Ausgestaltung der Erfindung erfolgt das Beschichten der Folie mit der Maskenschicht und/oder der zweiten Schicht durch Bedrucken der Folie, insbesondere mittels Siebdruck, und/oder durch Lackieren der Folie. Diese Maßnahmen stellen besonders einfache, schnelle und kostengünstige Möglichkeiten dar, die Folie zu beschichten. Um mittels Siebdruck die Maskenschicht auf die Folie aufzubringen, kann mit einem Sieb ein Teil der ersten Seite der Folie von der Druckfarbe bzw. dem Druckmaterial freigehalten werden, der dann den zumindest einen lichtdurchlässigen Bereich der Maskenschicht bereitstellt. Um die Maskenschicht mittels Lackieren auf die Folie aufzubringen, kann eine entsprechende Maskierung beziehungsweise Maske beim Lackierverfahren vorgesehen werden, sodass beim Lackieren ebenfalls Bereiche auf der ersten Seite der Folie durch die Maske freigehalten werden, die dann den zumindest einen lichtdurchlässigen Bereich der Maskenschicht bereitstellen.

Um die zweite Schicht auf die zweite Seite der Folie aufzubringen, kann die Folie großflächig bedruckt und/oder ohne Maske lackiert werden. Bedrucken und Lackieren stellen dabei besonders vorteilhafte Beschichtungsverfahren dar, da diese Verfahren besonders kostengünstig sind. Zudem lassen sich insbesondere hinsichtlich der Maskenschicht auch sehr filigran ausgebildete lichtdurchlässige Bereiche bereitstellen, insbesondere Strukturen mit Abmessungen ab zum Beispiel 0,5 mm, sodass sich durch diese Verfahren vielzählige beliebige Symbole, Graphiken, Konturen und dergleichen auf einfache Weise bereitstellen lassen. Weitere Möglichkeiten zur Beschichtung der Folie sind beispielsweise auch durch Bedampfen der Folie mit den jeweiligen Beschichtungen gegeben, hinsichtlich der Maskenschicht mit einer entsprechend zum Lackieren bereitgestellten Maske.

Bei einer weiteren vorteilhaften Ausgestaltung der Erfindung kann das Beschichten der Folie mit der Maskenschicht und/oder der zweiten Schicht auch durch Hinterspritzen der Folie erfolgen. Diese Variante ist dahingehend besonders vorteilhaft, als das Hinterspritzen der Folie mit der Maskenschicht und/oder der zweiten Schicht sowie auch das Hinterspritzen der beschichteten Folie zur Bildung des Trägers im Rahmen eines gemeinsamen Spritzgussverfahrens, zum Beispiel in aufeinanderfolgenden Verfahrensschritten des Spritzgussverfahrens, umgesetzt werden können. Dies bringt große Zeitvorteile beim Herstellen des Anbauteils mit sich.

Bei einer weiteren vorteilhaften Ausgestaltung der Erfindung erfolgt das Beschichten der Folie mit der Maskenschicht, in dem eine lichtundurchlässige erste Schicht auf die erste Seite der Folie aufgebracht wird und das Material der aufgebrachten ersten Schicht zur Erzeugung des lichtdurlässigen Bereichs der Maskenschicht abgetragen wird. Das Beschichten mit der ersten Schicht kann dabei mit den oben genannten Verfahren, wie beispielsweise Drucken, insbesondere Siebdruck, Lackieren, Bedampfen, und dergleichen erfolgen. Der Vorteil besteht hierbei jedoch darin, dass durch das nachträgliche Abtragen von Material die erste Schicht großflächig, das heißt ohne die Notwendigkeit der Verwendung einer entsprechenden Maske, auf die erste Seite der Folie aufgebracht werden kann. Dadurch vereinfachen sich wiederum die Beschichtungsverfahren. Die Materialabtragung kann dabei beispielsweise durch Lasern erfolgen, was wiederum den besonders großen Vorteil hat, dass sich dadurch noch viel filigranere Strukturen, insbesondere mit einer Präzision ab 0,2 mm, bereitstellen lassen im Vergleich zu einer entsprechenden Maskierung beim Lackieren oder eines entsprechenden Siebs beim Drucken.

Bei einer weiteren vorteilhaften Ausgestaltung der Erfindung wird eine lichtdurchlässige Deckschicht auf die der Folie abgewandten Seite der zweiten Schicht aufgebracht. Sofern sich die zweite Schicht nicht über die gesamte zweite Seite der Folie erstreckt und/oder über eine gesamte Trägeroberfläche, kann diese Deckschicht auch auf der Folie und/oder Teilen der Trägeroberfläche aufgebracht werden. Diese Deckschicht kann beispielsweise mittels Kunststoffüberspritzung der zweiten Schicht und/oder den von der zweiten Schicht nicht bedeckten Teilen der Folie und/oder des Trägers erfolgen, kann klar ausgebildet sein für eine Glanzoptik, und dient insgesamt der Steigerung der Robustheit des Anbauteils. Weiterhin kann die Deckschicht vollständig transparent oder nur transluzent ausgebildet sein.

Bei einer weiteren vorteilhaften Ausgestaltung der Erfindung weisen die Deckschicht und/oder die zweite Schicht und/oder die Folie und/oder die Maskenschicht und/oder der Träger einen Kunststoff auf oder sind aus einem ausgebildet. Gerade hinsichtlich Spritzgussverfahren sind Kunststoffe besonders gut geeignet. Wenn zum Beispiel die Folie, die Maskenschicht und der Träger aus einem Kunststoff sind, kann die beschichtete Folie zur Bildung des Trägers mit einem entsprechenden Kunststoffmaterial auf einfache Weise hinterspritzt werden. Zudem wird es durch die Ausbildung der zweiten Schicht sowie der Deckschicht aus einem Kunststoffmaterial ermöglicht, auch die Deckschicht durch ein entsprechend einfaches Spritzgussverfahren durch Überspritzen der zweiten Schicht auf diese aufzubringen. Zudem können Kunststoffe mit vielzähligen unterschiedlichen Eigenschaften kostengünstig bereitgestellt werden, z.B. hart oder weich, farbig, farblos, klar, matt, transparent, transluzent, usw.

Bei einer weiteren vorteilhaften Ausgestaltung der Erfindung wird der lichtdurchlässige Bereich der Maskenschicht auf einer Seite der Maskenschicht, die dem Träger zugewandt ist, durch eine Beleuchtungseinrichtung beleuchtet. Dazu kann eine entsprechende Beleuchtungseinrichtung am Anbauteil angeordnet werden. Der lichtdurchlässige Bereich des Trägers und/oder der lichtdurchlässige der Maskenschicht und/oder die Folie und/oder die Deckschicht sind in ihren Transmissionseigenschaften bevorzugt derart ausgebildet, dass mindestens 5% des auf den lichtdurchlässigen Bereich des Trägers und/oder der Maskenschicht treffenden Lichts transmittiert wird, bevorzugt mindestens 20%. Besonders bevorzugt weist das Anbauteil in diesem Bereich eine Lichttransmission von zwischen 70% und 80% auf. Eine derartig bemessene Lichttransmission hat den Vorteil, dass diese zum einen noch ausreichend gering ist, damit die lichtdurchlässigen Bereiche der Maskenschicht im unbeleuchteten Zustand des Anbauteils nicht von den lichtundurchlässigen Bereichen unterscheidbar sind, und zum anderen auch hinreichend hoch genug ist, um eine energieeffiziente Beleuchtung mit wenig Lichtverlusten bereitzustellen. Die entsprechenden Schichten beziehungsweise lichtdurchlässigen Bereiche der jeweiligen Schichten bzw. der Folie können mit einer entsprechenden Pigmentierung und/oder zusätzlichen Streuadditiven versehen sein, um auf einfache Weise gewünschte optische Eigenschaften der jeweiligen Schichten, Schichtbereiche bzw. der Folie bereitzustellen.

Des Weiteren betrifft die Erfindung ein beleuchtbares Anbauteil für ein Kraftfahrzeug, wobei das Anbauteil eine lichtdurchlässige Folie aufweist, die eine erste Seite und eine der ersten Seite gegenüberliegende zweite Seite aufweist. Dabei ist zumindest ein Teil der ersten Seite der Folie mit einer Maskenschicht beschichtet, die bis auf zumindest einen lichtdurchlässigen Bereich lichtundurchlässig ausgebildet ist. Weiterhin ist zumindest ein Teil der zweiten Seite der Folie mit einer zweiten Schicht beschichtet, die derart ausgebildet ist, dass sie nur einen vorbestimmten Anteil an auf die Folie treffendes Licht durchlässt, und die eine Pigmentierung oder Streuadditive oder einen Farbton aufweist. Darüber hinaus weist das Anbauteil einen Träger auf, mit dem die Folie verbunden ist, wobei die Folie und der Träger nicht lösbar voneinander und einstückig ausgebildet sind. Der Träger weist dabei einen lichtdurchlässigen Bereich auf, der an den zumindest einen lichtdurchlässigen Bereich der Maskenschicht angrenzt. Der große Vorteil der Erfindung zeigt sich hier wiederum in der Kombination der Verwendung einer Folie mit einem Träger. Die Verwendung einer Folie ermöglicht es wiederum, besonders einfache und kostengünstige Verfahren zur Beschichtung der Folie mit der Maskenschicht und der zweiten Schicht zu verwenden. Der Träger stellt weiterhin die nötige Stabilität für die Folie bereit, kann durch Spritzgussverfahren in jeder beliebigen dreidimensionalen Form ausgebildet werden und die Folie kann sich vorteilhafterweise durch ihre Flexibilität jeder beliebigen Oberflächenform anpassen kann ohne dabei selbst dreidimensional ausgebildet sein zu müssen, sodass insgesamt ein besonders einfaches und kostengünstiges Anbauteil bereitgestellt wird.

Die für das erfindungsgemäße Verfahren und seine Ausgestaltungen genannten Merkmale, Merkmalskombinationen und deren Vorteile gelten in gleicher Weise für das erfindungsgemäße Anbauteil. Darüber hinaus ermöglichen die im Zusammenhang mit dem erfindungsgemäßen Verfahren und seiner Ausgestaltungen genannten Verfahrensschritte die Weiterbildung des erfindungsgemäßen Anbauteils durch weitere gegenständliche Merkmale. Insbesondere ist das erfindungsgemäße Anbauteil ein Anbauteil, dass mit einem erfindungsgemäßen Verfahren oder einer seiner Ausgestaltungen hergestellt wurde.

Des Weiteren betrifft die Erfindung ein Kraftfahrzeug mit einem erfindungsgemäßen Anbauteil. Das Anbauteil weist dabei weiterhin bevorzugt eine Beleuchtungseinrichtung auf, die derart angeordnet ist, dass der lichtdurchlässige Bereich des Trägers auf einer Seite des Trägers, die der bedruckten Folie abgewandt ist, beleuchtbar ist. Die Beleuchtungseinrichtung kann dabei eine oder mehrere Lichtquellen aufweisen, wie beispielsweise LEDs, und/oder ein Leuchttextil und/oder einen Lichtleiter, insbesondere einen Lichtleiter mit einer Struktur und/oder einen Flächenlichtleiter. Dies stellt zahlreiche vorteilhafte Möglichkeiten bereit, das Anbauteil zu beleuchten.

Darüber hinaus sind zudem vielzählige Möglichkeiten gegeben, das Ein- und/oder Ausschalten der Beleuchtungseinrichtung von verschiedenen Faktoren abhängig zu machen.

Bei einer vorteilhaften Ausgestaltung der Erfindung ist das Kraftfahrzeug derart ausgestaltet, dass die Beleuchtungseinrichtung manuell durch einen Benutzer ein- und /oder ausschaltbar ist. Auf diese Weise ist es möglich, es dem Benutzer selbst zu überlassen, wann das Anbauteil beleuchtet werden soll oder nicht. Das durch das Anbauteil bereitgestellte Design, ob Tagdesign oder Nachtdesign, kann damit vom Benutzer in vorteilhafter Weise selbst gewählt werden.

Bei einer weiteren vorteilhaften Ausgestaltung der Erfindung weist das Kraftfahrzeug eine Steuereinrichtung zur Ansteuerung der Beleuchtungseinrichtung auf, wobei die Steuereinrichtung dazu ausgelegt ist, die Beleuchtungseinrichtung automatisch in Abhängigkeit von zumindest einem erfassten Ereignis ein- und/oder auszuschalten. Dadurch ist es vorteilhafterweise möglich, das Ein- und Ausschalten der Beleuchtungseinrichtung automatisch, das heißt ohne das Zutun eines Benutzers, vorzunehmen und dieses Ein- und Ausschalten zudem situativ gekoppelt mit den erfassten Ereignissen an verschiedenste Gegebenheiten anzupassen. Das erfasste Ereignis kann dabei beispielsweise einen von einem Erfassungsmittel des Kraftfahrzeugs erfassten Parameter darstellen und/oder eine von einem Erfassungsmittel des Kraftfahrzeugs erfassten und von einem manuellen Ein- und/oder Ausschalten der Beleuchtungseinrichtung verschiedenen Handlung des Benutzers. Beispielsweise kann das Ein- und Ausschalten der Beleuchtungseinrichtung gekoppelt sein mit dem Ver- und Entriegeln der Türen des Kraftfahrzeugs, mit einem Starten und Abschalten des Motors des Kraftfahrzeugs, mit dem An- und Abschnallen eines Insassen des Kraftfahrzeugs oder auch mit jeder anderen beliebigen Bedienhandlung des Benutzers. Darüber hinaus ist auch die Möglichkeit gegeben, das An- und Ausschalten der Beleuchtungseinrichtung mit der Uhrzeit zu koppeln, beispielsweise so, dass die Beleuchtungseinrichtung nur abends oder nachts angeschaltet wird und tagsüber deaktiviert ist. Des Weiteren kann das Ein- und Ausschalten auch an die Umgebungshelligkeit, die beispielsweise mit entsprechenden Sensoren erfasst wird, gekoppelt sein, sodass die Beleuchtungseinrichtung lediglich aktiviert wird, wenn eine vorbestimmten Umgebungshelligkeit unterschritten wird. Darüber hinaus ist es auch möglich, die oben genannten Bedingungen für das Ein- und Ausschalten der Beleuchtungseinrichtung miteinander zu kombinieren, beispielsweise so, dass die Beleuchtungseinrichtung zum Beispiel aktiviert wird, wenn das Kraftfahrzeug entriegelt wird jedoch nur unter der Voraussetzung, dass die Umgebungshelligkeit den vorbestimmten Grenzwert unterschreitet. Auch können die automatischen Ein- und Ausschaltvarianten mit der Möglichkeit, die Beleuchtungsaktivierung manuell ein- und auszuschalten kombiniert werden, so dass trotz automatischer Ein- und Ausschaltung der Beleuchtungseinrichtung jederzeit dem Benutzer die Möglichkeit gegeben ist, die Beleuchtungseinrichtung auch zusätzlich manuell ein- und auszuschalten. Damit sind in vorteilhafter Weise viele Möglichkeiten bereitgestellt, eine situationsangepasste Beleuchtung durch das beleuchtbare Anbauteil zur Verfügung zu stellen, ohne dabei einen Benutzer zu bevormunden.

Weitere Einzelheiten, Merkmale und Vorteile der Erfindung ergeben sich aus der nachfolgenden Beschreibung bevorzugter Ausführungsbeispiele sowie anhand der Zeichnung. Dabei zeigen:
- Fig. 1: eine schematische Darstellung eines beleuchtbaren Anbauteils im Querschnitt gemäß einem Ausführungsbeispiel der Erfindung;
- Fig. 2a: eine schematische und perspektivische Darstellung eines beleuchtbaren Anbauteils im nicht-beleuchteten Zustand;
- Fig. 2b: eine schematische und perspektivische Darstellung des beleuchtbaren Anbauteils aus Fig. 2a im beleuchteten Zustand;
- Fig. 3: eine schematische Darstellung einer Innenraumverkleidung einer Kraftfahrzeugtür mit einem beleuchtbaren Anbauteil gemäß einem Ausführungsbeispiel der Erfindung; und
- Fig. 4: eine schematische Darstellung eines Ablaufdiagramms zur Veranschaulichung eines Verfahrens zum Herstellen eines beleuchtbaren Anbauteils gemäß einem Ausführungsbeispiel der Erfindung.

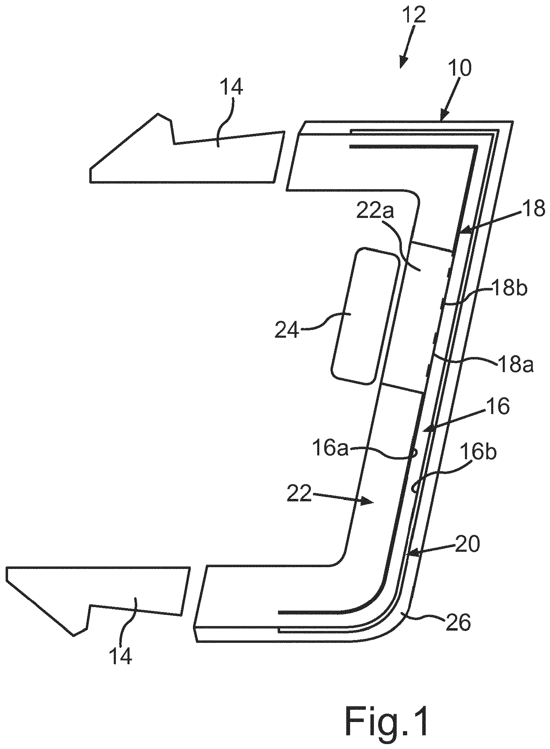

Fig. 1 zeigt eine schematische Querschnittdarstellung eines Anbauteils 10, insbesondere in einem Kraftfahrzeuginnenraum 12, gemäß einem Ausführungsbeispiel der Erfindung. Das Anbauteil 10 kann dabei mittels Befestigungselementen 14 im Kraftfahrzeuginnenraum 12 befestigt werden. Das Anbauteil 10 weist eine Folie 16 auf, welche bevorzugt eine Kunststofffolie darstellt und lichtdurchlässig ist. Die Folie weist bevorzugt eine Foliendicke zwischen 2,2 mm und 3 mm, besonders bevorzugt zwischen 0,4 mm und 1,2 mm auf. Eine derartig dünne Folie hat den besonders großen Vorteil, dass sie besonders flexibel ist und sich dadurch jeder beliebigen dreidimensionalen Oberfläche auf besonders einfache Weise, insbesondere im Zuge eines Spritzgussverfahrens, anpassen kann.

Die Folie 16 weist weiterhin eine erste Seite 16a und eine der ersten Seite 16a gegenüberliegende zweite Seite 16b auf. Die erste Seite 16a ist dabei mit einer Maskenschicht 18 beschichtet. Diese Maskenschicht 18 weist lichtdurchlässige Bereiche 18a und lichtundurchlässige Bereiche 18b auf, wobei aus Gründen der Übersichtlichkeit nur jeweils einer mit einem Bezugszeichen versehen ist. Durch die lichtdurchlässigen Bereiche 18a der Maskenschicht 18 wird eine gewünschte Graphik, ein Symbol, ein Muster, eine Kontur und dergleichen geformt werden, welches bei Beleuchtung des Anbauteils, insbesondere der lichtdurchlässigen Bereiche 18a der Maskenschicht 18 in Erscheinung tritt. Diese Maskenschicht 18 kann durch diverse Beschichtungsverfahren, wie beispielsweise Drucken, insbesondere Siebdruck, oder Lackieren mit Freimachung einer Graphik Und/oder Kontur und/oder eines Schriftzugs durch den Sieb oder eine entsprechende Maske aufgebracht werden. Auch kann für die Maskenschicht eine lichtundurchlässige Beschichtung großflächig aufgebracht werden und nachträglich Material durch Lasern oder andere Abtragungsverfahren abgetragen werden, sodass die lichtundurchlässigen Bereiche 18a entstehen. Auch ist es denkbar, die lichtundurchlässigen Bereiche 18b der Maskenschicht 18 durch ein Mehrkomponenten-Spritzgussverfahren auf die Folie 16 aufzubringen.

Damit der Unterschied zwischen den lichtdurchlässigen Bereichen 18a und den lichtundurchlässigen Bereichen 18b im nicht-beleuchteten Zustand des Anbauteils 10 von außen, d.h. in der Darstellung von rechts, nicht sichtbar ist, weist das Anbauteil 10 auf der zweiten Seite 16b der Folie 16 eine zweite Schicht 20 auf. Diese zweite Schicht 20 ist dabei derart ausgestaltet, dass sie nur einen vorbestimmten Anteil an auf die Folie 16 treffendes Licht durchlässt. Dazu kann die zweite Schicht 20 eine entsprechende Pigmentierung oder Streuadditive aufweisen. Auch kann die zweite Schicht 20 einen beliebigen Farbton aufweisen. Die zweite Schicht kann dabei ebenfalls mit den oben genannten Beschichtungsverfahren auf die Folie 16 aufgebracht sein. Um einen sogenannten Black-Panel-Effekt zu erzielen, kann die zweite Schicht 20 als schwarzer Druck auf die Folie 16 aufgedruckt sein.

Die Maskenschicht 18 und/oder die zweite Schicht 20 müssen sich dabei nicht zwingend über die gesamte erste Seite 16a beziehungsweise zweite Seite 16b der Folie 16 erstrecken, sondern können auch nur in einem Teilbereich der Folie aufgebracht sein. Bevorzugt ist es hierbei, dass die lichtdurchlässigen Bereiche 18a der Maskenschicht 18 mit den dazwischen liegenden lichtundurchlässigen Bereichen 18b der Maskenschicht und die zweite Schicht 20 in Richtung der Schichtfolge, d.h. senkrecht zur jeweiligen Schicht bzw. Folie, übereinander liegend angeordnet sind, damit der Unterschied zwischen den lichtdurchlässigen Bereichen 18a und den lichtundurchlässigen Bereichen 18b der Maskenschicht 18 durch die zweite Schicht 20 im nicht beleuchteten Zustand des Anbauteils 10 kaschiert werden kann.

Des Weiteren weist das Anbauteil 10 einen Träger 22 auf. Dieser wird vorteilhafterweise durch Hinterspritzen der beschichteten Folie 16, das heißt im mit der Maskenschicht 18 und der zweiten Schicht 20 beschichteten Zustand der Folie 16, im Zuge eines Spritzgussverfahrens ausgebildet. Der Träger 22 weist dabei einen lichtdurchlässigen Bereich 22a auf, der an die lichtdurchlässigen Bereiche 18a der Maskenschicht und insbesondere auch an die zwischen den lichtdurchlässigen Bereichen 18a liegenden lichtundurchlässigen Bereichen 18b der Maskenschicht 18 angrenzt. Dieser lichtdurchlässige Bereich 22a des Trägers 22 ist dabei als Freiraum ausgebildet. Dies lässt sich auf einfache Weise durch ein Mehrkomponenten-Spritzgussverfahren umsetzen. Weiterhin ist in diesem Beispiel eine Lichtquelle 24 als Teil einer Beleuchtungseinrichtung des Anbauteils 10 hinter dem lichtdurchlässigen Bereich 22a des Trägers 22, das heißt auf der Seite der Maskenschicht 18, die der Folie 16 abgewandt ist, angeordnet, um die lichtdurchlässigen Bereiche 18a der Maskenschicht zu beleuchten. Die Lichtquelle 24 kann dabei eine oder mehrere LEDs und/oder ein Leuchttextil, insbesondere in Kombination mit oder ohne einem Lichtleiter, darstellen.

Darüber hinaus weist das Anbauteil 10 noch eine Deckschicht 26 auf, welche beispielsweise als klare Kunststoffüberspritzung für eine Glanzoptik bereitgestellt werden kann und die Robustheit des Anbauteils 10 steigert.

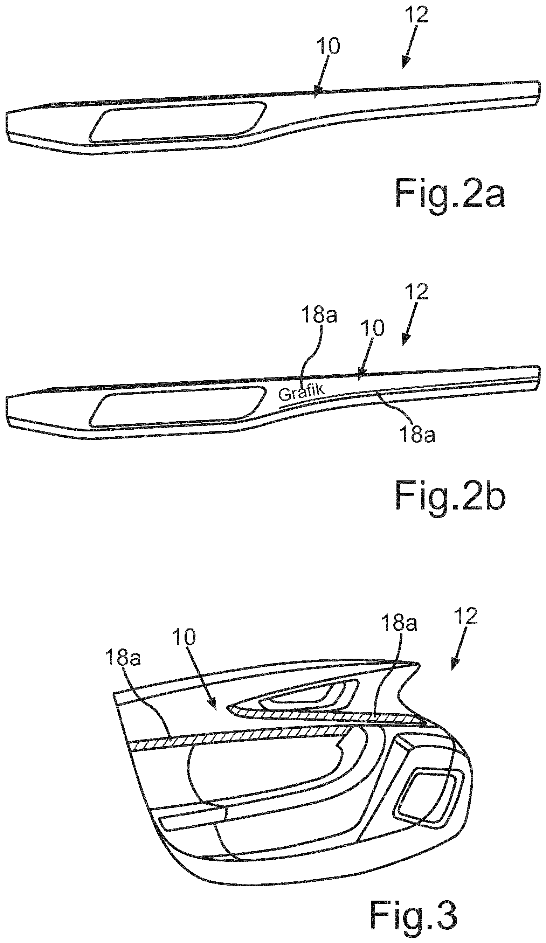

Die Folie 16, die zweite Schicht 20 und/oder die Deckschicht 26 sind dabei insgesamt so ausgestaltet, dass sich ein gewünschter Transmissionsgrad ergibt, der bevorzugt zwischen 70% und 80% liegt. Dadurch lässt es sich bewerkstelligen, dass die Kontur, Graphik oder der Schriftzug, der durch die lichtdurchlässigen Bereiche 18a bereitgestellt wird, nur im beleuchteten Zustand des Anbauteils 10 und nicht im unbeleuchteten Zustand sichtbar ist. Dies soll in den Fig. 2a und Fig. 2b veranschaulicht werden.

Fig. 2a zeigt dabei eine schematische und perspektivische Darstellung eines beleuchtbaren Anbauteils 10 im unbeleuchteten Zustand gemäß einem Ausführungsbeispiel der Erfindung und Fig. 2b eine schematische und perspektivische Darstellung des beleuchtbaren Anbauteils 10 aus Fig. 2a im beleuchteten Zustand gemäß einem Ausführungsbeispiel der Erfindung. Während das Anbauteil 10 im unbeleuchteten Zustand mit einer optisch einheitlichen Oberfläche erscheint, wird im beleuchteten Zustand des Anbauteils 10 eine Graphik, Kontur, ein Schriftzug, Symbol und dergleichen sichtbar, deren Form durch die durchlässigen Bereiche 18a der Maskenschicht 18 bestimmt ist.

Fig. 3 zeigt eine schematische Darstellung einer Innenraumverkleidung für eine Kraftfahrzeugtür mit einem Anbauteil 10, bei welchem durch eine entsprechende Ausbildung der lichtdurchlässigen Bereiche 18a der Maskenschicht 18 im beleuchteten Zustand eine Konturbeleuchtung bereitgestellt wird.

Durch die Erfindung lassen sich damit völlig neue Gestaltungskonzepte auf besonders einfache und kostengünstige Weise realisieren, die eine Designarchitektur durch Licht mit No-Show Charakteristik im nicht-beleuchteten Zustand ermöglichen, und das Tagdesign, das heißt das Anbauteil 10 im unbeleuchteten Zustand, unbeeinflusst lassen.

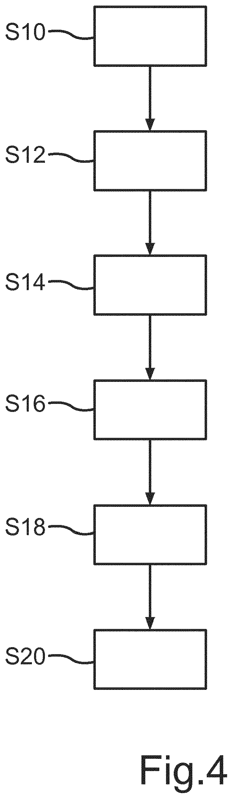

Fig. 4 zeigt eine schematische Darstellung eines Ablaufdiagramms zur Veranschaulichung eines Verfahrens zum Herstellen eines beleuchtbaren Anbauteils 10 gemäß einem Ausführungsbeispiel der Erfindung. Das Verfahren beginnt in Schritt S10, in welchem eine lichtdurchlässige Folie 16 mit einer ersten Seite 16a und einer der ersten Seite 16a gegenüberliegenden zweiten Seite 16b bereitgestellt wird. In Schritt S12 wird die erste Seite 16a der Folie 16 mit einer Maskenschicht 18, welche einen oder mehrere lichtdurchlässige Bereiche 18a aufweisen kann, und ansonsten lichtundurchlässig ausgebildet ist, beschichtet. Die lichtdurchlässigen Bereiche 18a bilden dabei eine vorbestimmte Graphik, Kontur, ein Symbol oder einen Schriftzug. Im nächsten Schritt S14 wird an die zweite Seite 16b der Folie 16 mit einer zweiten Schicht 20 mit einem Wert x an Lichttransmission, der durch eine geeignete Ausgestaltung des Materials der zweiten Schicht 20 bestimmt ist, beschichtet. Alternativ kann es auch vorgesehen sein, dass die Folie 16 zuerst mit der zweiten Schicht 20 und anschließend mit der Maskenschicht 18 beschichtet wird oder dass das Beschichten mit der Maskenschicht 18 und der zweiten Schicht 20 sogar gleichzeitig erfolgt.

In einem weiteren Schritt S16 wird die nun beschichtete Folie 16 durch Hinterspritzen mit einem Träger 22 ausgebildet, der einen lichtdurchlässigen, zusammenhängenden Bereich aufweist, der an die lichtdurchlässigen Bereiche der Maskenschicht angrenzt. Durch Hinterspritzen der Folie 16 lässt sich auf einfache und kostengünstige Weise ein Träger 22 mit beliebiger Oberflächengeometrie ausbilden, der dadurch mit der Folie 16 unlösbar und einstückig ausgebildet wird.

Darüber hinaus können nun in weiteren Verfahrensschritten, insbesondere in einem Schritt S18, noch eine Beleuchtungseinrichtung mit einer Lichtquelle 24 zum Beleuchten der lichtdurchlässigen Bereiche 18a der Maskenschicht 18 bereitgestellt werden und das Anbauteil 10 in einem Kraftfahrzeuginnenraum 12 über entsprechende Befestigungselemente 14 angeordnet werden. Weiterhin kann es auch vorgesehen sein, dass in einem Schritt S20 die Beleuchtungseinrichtung mit einer Steuereinrichtung gekoppelt wird, die Abhängigkeit verschiedener Kriterien die Beleuchtungseinrichtung steuert. Dadurch lässt es sich beispielsweise bewerkstelligen, dass die Beleuchtungseinrichtung automatisch bei Dunkelheit eingeschaltet und bei Helligkeit abgeschaltet wird, dass ein Ein- und Ausschalten der Beleuchtungseinrichtung in Abhängigkeit von einer vorbestimmten Bedienhandlung des Benutzers erfolgt, beispielsweise ein Anschnallen, Abschnallen, ein Ent- oder Verriegeln der Türen, ein Starten des Motors, usw. Darüber hinaus kann es auch vorgesehen sein, dass sich die Beleuchtungseinrichtung des Anbauteils 10 manuell durch einen Benutzer ein- und ausschalten lässt.

Insgesamt wird so ein kostengünstiges Anbauteil und Verfahren zu seiner Herstellung bereitgestellt, welche vielzählige vorteilhafte Möglichkeiten zur Bereitstellung unterschiedlicher und situationsangepasster Lichteffekte bieten.

## Patentansprüche

1. Verfahren zum Herstellen eines beleuchtbaren Anbauteils (10), welches an ein Kraftfahrzeug (12) anbringbar ist, mit den Schritten:
a) Bereitstellen einer lichtdurchlässigen Folie (16) mit einer ersten Seite (16a) und einer der ersten Seite (16a) gegenüberliegenden zweiten Seite (16b);
b) Beschichten zumindest eines Teils der ersten Seite (16a) der Folie (16) mit einer Maskenschicht (18), die bis auf zumindest einen lichtdurchlässigen Bereich (18a) lichtundurchlässig ist;
c) Beschichten zumindest eines Teils der zweiten Seite (16b) der Folie (16) mit einer zweiten Schicht (20), welche derart ausgebildet ist, dass sie nur einen vorbestimmten Anteil an auf die Folie (16) treffendes Licht durchlässt, wobei die zweite Schicht eine Pigmentierung oder Streuadditive oder einen Farbton aufweist;
**gekennzeichnet durch**
d) Hinterspritzen der beschichteten Folie (16) in einem Spritzgussverfahren, wodurch für die Folie (16) ein Träger (22) gebildet wird, wobei der Träger (22) beim Hinterspritzen der Folie (16) derart ausgebildet wird, dass er einen lichtdurchlässigen Bereich (22a) aufweist, der an den zumindest einen lichtdurchlässigen Bereich (18a) der Maskenschicht (18) angrenzt, wobei der lichtdurchlässige Bereich (22a) des Trägers (22) als ein Freiraum ausgebildet wird.

2. Verfahren nach einem der vorhergehenden Ansprüche,
**dadurch gekennzeichnet, dass**
in Schritt d) die Folie (16) mit einem einkoponentigen oder zweikomponentigen Träger (22) hinterspritzt wird.

3. Verfahren nach einem der vorhergehenden Ansprüche,
**dadurch gekennzeichnet, dass**
das Beschichten in Schritt b) und/oder c) durch Bedrucken der Folie (16), insbesondere mittels Siebdruck, und/oder Lackieren der Folie (16) erfolgt.

4. Verfahren nach einem der vorhergehenden Ansprüche,
**dadurch gekennzeichnet, dass**
das Beschichten in Schritt b) und/oder c) durch Hinterspritzen der Folie (16) erfolgt.

5. Verfahren nach einem der vorhergehenden Ansprüche,
**dadurch gekennzeichnet, dass**
das Beschichten in Schritt b) erfolgt, indem eine lichtundurchlässige erste Schicht auf die erste Seite (16a) der Folie (16) aufgebracht wird und Material der aufgebrachten ersten Schicht zur Erzeugung des lichtdurchlässigen Bereichs (18a) der Maskenschicht (18) abgetragen wird.

6. Verfahren nach einem der vorhergehenden Ansprüche,
**dadurch gekennzeichnet, dass**
eine lichtdurchlässige Deckschicht (26) auf eine der Folie (16) abgewandten Seite der zweiten Schicht (20) aufgebracht wird.

7. Verfahren nach einem der vorhergehenden Ansprüche,
**dadurch gekennzeichnet, dass**
die Deckschicht (26) und/oder die zweite Schicht (20) und/oder die Folie (16) und/oder die Maskenschicht (18) und/oder der Träger (22) einen Kunststoff umfassten und/oder aus einem Kunststoff gebildet sind.

8. Verfahren nach einem der vorhergehenden Ansprüche,
**dadurch gekennzeichnet, dass**
der lichtdurchlässige Bereich der Maskenschicht (18) auf einer Seite der Maskenschicht (18), die der Folie (16) abgewandt ist, durch eine Beleuchtungseinrichtung beleuchtet wird.

9. Beleuchtbares Anbauteil (10) für ein Kraftfahrzeug, wobei das Anbauteil (10) eine lichtdurchlässiges Folie (16) aufweist, die eine erste Seite (16a) und eine der ersten Seite (16a) gegenüberliegende zweite Seite (16b) aufweist, wobei zumindest ein Teil der ersten Seite (16a) der Folie (16) mit einer Maskenschicht (18) beschichtet ist, die bis auf zumindest einen lichtdurchlässigen Bereich (18a) lichtundurchlässig ausgebildet ist, und wobei zumindest ein Teil der zweiten Seite (16b) der Folie (16) mit einer zweiten Schicht (20) beschichtet ist, die derart ausgebildet ist, dass sie nur einen vorbestimmten Anteil an auf die Folie (16) treffendes Licht durchlässt, wobei die zweite Schicht eine Pigmentierung oder Streuadditive oder einen Farbton aufweist,
**dadurch gekennzeichnet, dass**
das Anbauteil (10) einen Träger (22) aufweist, mit dem die Folie (16) verbunden ist, wobei die Folie (16) und der Träger (22) nicht lösbar voneinander und einstückig ausgebildet sind, wobei der Träger (22) einen lichtdurchlässigen Bereich (22a) aufweist, der an den zumindest einen lichtdurchlässigen Bereich (18a) der Maskenschicht (18) angrenzt, wobei der lichtdurchlässige Bereich (22a) des Trägers (22) als ein Freiraum ausgebildet wird.

10. Anbauteil (10) nach Anspruch 9, das mit einem Verfahren nach einem der Ansprüche 1 bis 8 bereitgestellt wurde.

11. Kraftfahrzeug **gekennzeichnet durch** ein Anbauteil (10) nach einem der Ansprüche 9 oder 10, wobei das Anbauteil (10) eine Beleuchtungseinrichtung (24) aufweist, die derart angeordnet ist, dass der lichtdurchlässige Bereich des Trägers (22) auf einer Seite des Trägers (22), die der bedruckten Folie (16) abgewandt ist, beleuchtbar ist.

12. Kraftfahrzeug nach Anspruch 11,
**dadurch gekennzeichnet, dass**
die Beleuchtungseinrichtung (24) eine oder mehrere Lichtquellen (24) aufweist und/oder ein Leuchttextil und/oder einen Lichtleiter, und/oder einen Lichtleiter mit einer Struktur und/oder einen Flächenlichtleiter.

13. Kraftfahrzeug nach Anspruch 11 oder 12,
**dadurch gekennzeichnet, dass**
das Kraftfahrzeug derart ausgestaltet ist, dass die Beleuchtungseinrichtung (24) manuell durch einen Benutzer ein- und/oder ausschaltbar ist.

14. Kraftfahrzeug nach einem der Ansprüche 11 bis 13,
**dadurch gekennzeichnet, dass**
das Kraftfahrzeug eine Steuereinrichtung zur Ansteuerung der Beleuchtungseinrichtung (24) aufweist, wobei die Steuereinrichtung dazu ausgelegt ist, die Beleuchtungseinrichtung (24) automatisch in Abhängigkeit von zumindest einem erfassten Ereignis ein- und/oder auszuschalten, insbesondere wobei das Ereignis einen von einem Erfassungsmittel des Kraftfahrzeugs erfassten Parameter und/oder eine von einem Erfassungsmittel des Kraftfahrzeugs erfassten und von einem manuellen Ein- und/oder Ausschalten der Beleuchtungseinrichtung (24) verschiedenen Handlung des Benutzers darstellt.

## Claims

1. A method for producing an attachment part (10) capable of being illuminated, which can be attached to a motor vehicle (12), comprising the steps:
a) providing a translucent foil (16) with a first side (16a) and a second side (16b) opposing the first side (16a);
b) coating at least a part of the first side (16a) of the foil (16) with a mask layer (18), which is opaque except for at least one translucent area (18a);
c) coating at least a part of the second side (16b) of the foil (16) with a second layer (20), which is formed such that it only allows a predetermined portion of light impinging on the foil (16) to pass through, wherein the second layer comprises a pigmentation or scattering additives or a tint;
**characterized by**
d) back-molding the coated foil (16) in an injection molding method, whereby a carrier (22) is formed for the foil (16), wherein the carrier (22) is formed in back-molding the foil (16) such that it comprises a translucent area (22a), which adjoins to the at least one translucent area (18a) of the mask layer (18), wherein the translucent area (22a) of the carrier (22) is formed as a clearance.

2. The method according to any one of the preceding claims,
**characterized in that**
in step d), the foil (16) is back-molded with a one-component or two-component carrier (22).

3. The method according to any one of the preceding claims,
**characterized in that**
coating in step b) and/or c) is effected by imprinting the foil (16), in particular by means of screen printing, and/or varnishing the foil (16).

4. The method according to any one of the preceding claims,
**characterized in that**
coating in step b) and/or c) is effected by back-molding the foil (16).

5. The method according to any one of the preceding claims,
**characterized in that**
coating in step b) is effected **in that** an opaque first layer is applied to the first side (16a) of the foil (16) and material of the applied first layer is removed for generating the translucent area (18a) of the mask layer (18).

6. The method according to any one of the preceding claims,
**characterized in that**
a translucent cover layer (26) is applied to a side of the second layer (20) facing away from the foil (16).

7. The method according to any one of the preceding claims,
**characterized in that**
the cover layer (26) and/or the second layer (20) and/or the foil (16) and/or the mask layer (18) and/or the carrier (22) include a plastic and/or are formed of a plastic.

8. The method according to any one of the preceding claims,
**characterized in that**
the translucent area of the mask layer (18) is illuminated by an illumination device on a side of the mask layer (18), which faces away from the foil (16).

9. An attachment part (10) capable of being illuminated for a motor vehicle, wherein the attachment part (10) comprises a translucent foil (16), which comprises a first side (16a) and a second side (16b) opposing the first side (16a), wherein at least a part of the first side (16a) of the foil (16) is coated with a mask layer (18), which is formed opaque except for at least one translucent area (18a), and wherein at least a part of the second side (16b) of the foil (16) is coated with a second layer (20), which is formed such that it only allows a predetermined portion of light impinging on the foil (16) to pass through, wherein the second layer comprises a pigmentation or scattering additives or a tint,
**characterized in that**
the attachment part (10) comprises a carrier (22), to which the foil (16) is connected, wherein the foil (16) and the carrier (22) are formed non-detachable from each other and in one-piece manner, wherein the carrier (22) comprises a translucent area (22a), which adjoins to the at least one translucent area (18a) of the mask layer (18), wherein the translucent area (22a) of the carrier (22) is formed as a clearance.

10. The attachment part (10) according to claim 9, which has been provided by a method according to any one of claims 1 to 8.

11. A motor vehicle **characterized by** an attachment part (10) according to any one of claims 9 or 10, wherein the attachment part (10) comprises an illumination device (24), which is arranged such that the translucent area of the carrier (22) can be illuminated on a side of the carrier (22), which faces away from the imprinted foil (16).

12. The motor vehicle according to claim 11,
**characterized in that**
the illumination device (24) comprises one or more light sources (24) and/or a luminous textile and/or a light guide and/or a light guide with a structure and/or a surface light guide.

13. The motor vehicle according to claim 11 or 12,
**characterized in that**
the motor vehicle is configured such that the illumination device (24) can be manually turned on and/or off by a user.

14. The motor vehicle according to any one of claims 11 to 13, **characterized in that**
the motor vehicle comprises a control device for controlling the illumination device (24), wherein the control device is adapted to automatically turn on and/or off the illumination device (24) depending on at least one captured event, in particular wherein the event represents a parameter captured by a capturing means of the motor vehicle and/or an action of the user captured by a capturing means of the motor vehicle and different from manually turning on and/or off the illumination device (24).

## Revendications

1. Procédé de fabrication d'une pièce rapportée pouvant être éclairée (10) qui peut être fixée à un véhicule à moteur (12), comportant les étapes consistant à :
a) fournir un film translucide (16) ayant une première face (16a) et une seconde face (16b) opposée à la première face (16a) ;
b) revêtir au moins une partie de la première face (16a) du film (16) d'une couche de masque (18) qui est opaque jusqu'à au moins une zone translucide (18a) ;
c) revêtir au moins une partie de la seconde face (16b) du film (16) d'une seconde couche (20) qui est réalisée de telle sorte qu'elle laisse uniquement passer une quantité prédéterminée de lumière incidente sur le film (16), la seconde couche comportant une pigmentation ou des additifs de diffusion ou une teinte ;
**caractérisé par**
d) le surmoulage par injection du film revêtu (16) dans un procédé de moulage par injection, en sorte qu'un support (22) est formé pour le film (16), le support (22) étant réalisé lors du surmoulage par injection du film (16), de telle sorte qu'il comporte une zone translucide (22a) adjacente à la au moins une zone translucide (18a) de la couche de masque (18), la zone translucide (22a) du support (22) étant réalisée sous la forme d'un espace libre.

2. Procédé selon l'une des revendications précédentes,
**caractérisé en ce qu'**
à l'étape d), le film (16) est surmoulé par injection avec un support (22) à un composant ou à deux composants.

3. Procédé selon l'une des revendications précédentes,
**caractérisé en ce que**
le revêtement de l'étape b) et/ou c) est effectué par impression du film (16), en particulier par impression en sérigraphie, et/ou vernissage du film (16).

4. Procédé selon l'une des revendications précédentes,
**caractérisé en ce que**
le revêtement de l'étape b) et/ou c) est effectué par un surmoulage par injection du film (16).

5. Procédé selon l'une des revendications précédentes,
**caractérisé en ce que**
le revêtement de l'étape b) est effectué en appliquant une première couche opaque sur la première face (16a) du film (16) et en enlevant de la matière de la première couche appliquée afin de produire la zone translucide (18a) de la couche de masque (18).

6. Procédé selon l'une des revendications précédentes,
**caractérisé en ce que**
une couche de recouvrement translucide (26) est appliquée sur une face de la seconde couche (20) opposée au film (16).

7. Procédé selon l'une des revendications précédentes,
**caractérisé en ce que**
la couche de recouvrement (26) et/ou la seconde couche (20) et/ou le film (16) et/ou la couche de masque (18) et/ou le support (22) comprennent une matière plastique et/ou sont formés à partir d'une matière plastique.

8. Procédé selon l'une des revendications précédentes,
**caractérisé en ce que**
la zone translucide de la couche de masque (18) sur une face de la couche de masque (18) opposée au film (16) est éclairée par un dispositif d'éclairage.

9. Pièce rapportée pouvant être éclairée (10) pour un véhicule à moteur, la pièce rapportée (10) comportant un film translucide (16) qui comporte une première face (16a) et une seconde face (16b) opposée à la première face (16a), au moins une partie de la première face (16a) du film (16) étant revêtue d'une couche de masque (18) qui est réalisée de manière opaque jusqu'à au moins une zone translucide (18a), et au moins une partie de la seconde face (16b) du film (16) étant revêtue d'une seconde couche (20) de telle sorte qu'elle laisse uniquement passer une quantité prédéterminée de lumière incidente sur le film (16), la seconde couche comportant une pigmentation ou des additifs de dispersion ou une teinte,
**caractérisée en ce que**
la pièce rapportée (10) comporte un support (22) auquel le film (16) est relié, le film (16) et le support (22) ne pouvant pas être détachés l'un de l'autre et étant réalisés d'un seul tenant, le support (22) comportant une zone translucide (22a) adjacente à la au moins une zone translucide (18a) de la couche de masque (18), la zone translucide (22a) du support (22) étant réalisée sous la forme d'un espace libre.

10. Pièce rapportée (10) selon la revendication 9, qui a été fournie par un procédé selon l'une des revendications 1 à 8.

11. Véhicule à moteur, **caractérisé par** une pièce rapportée (10) selon l'une des revendications 9 ou 10, dans lequel la pièce rapportée (10) comporte un dispositif d'éclairage (24) agencé de telle sorte que la zone translucide du support (22) sur une face du support (22) opposée au film imprimé (16) peut être éclairée.

12. Véhicule à moteur selon la revendication 11,
**caractérisé en ce que**
le dispositif d'éclairage (24) comporte une ou plusieurs sources de lumière (24) et/ou un textile luminescent et/ou un conduit lumineux et/ou un conduit lumineux avec une structure et/ou un conduit lumineux de surface.

13. Véhicule à moteur selon la revendication 11 ou 12,
**caractérisé en ce que**
le véhicule à moteur est conçu de telle sorte que le dispositif d'éclairage (24) peut être mis en marche et/ou arrêté manuellement par un utilisateur.

14. Véhicule à moteur selon l'une des revendications 11 à 13,
**caractérisé en ce que**
le véhicule à moteur comporte un dispositif de commande pour commander le dispositif d'éclairage (24), le dispositif de commande étant conçu pour mettre en marche et/ou arrêter automatiquement le dispositif d'éclairage (24) en fonction d'au moins un événement détecté, l'événement représentant en particulier un paramètre détecté par des moyens de détection du véhicule à moteur et/ou une action de l'utilisateur différente d'une mise en marche et/ou d'un arrêt manuel du dispositif d'éclairage (24) et détectée par des moyens de détection du véhicule à moteur.
